# DEMANDE DE BREVET EUROPEEN

(11) **EP 1 320 153 A1**
(43) Date de publication de la demande: **18.06.2003**
(21) Numéro de dépôt: 02360347.5
(22) Date de dépôt: 12.12.2002
(51) Int. Cl.: H01R 35/02, B60R 16/02

(54) **Dispositif de liaison électrique entre deux corps en rotation relative**

(30) Priorité: 12.12.2001 FR 0116044
(71) Demandeur: Delphi Technologies, Inc., Troy, MI 48007 (US)
(72) Inventeur: Zann, Olivier, 68280 Urmatt (FR); Kayser, Hervé, 67640 Fegersheim (FR); Moy, Aurélie, 67000 Strasbourg (FR)
(74) Mandataire: Merckling, Norbert (FR)

(57) **Abrégé**

Dispositif assurant la liaison électrique entre deux corps respectivement fixe et mobile animés d'un mouvement relatif de rotation, définissant entre eux un espace annulaire d'axe confondu avec l'axe de rotation, et présentant deux parois en regard respectivement intérieure et extérieure issue chacune d'un desdits corps, entre lesquelles sont disposés d'une part au moins un câble plat flexible de liaison électrique enroulé en spirale de sorte que chacune de ses extrémités soit fixée à l'une desdites parois, et d'autre part au moins une pièce de guidage apte à se déplacer relativement aux dits corps lorsque ceux-ci sont en mouvement relatif, selon une trajectoire circulaire centrée sur ledit axe de rotation, ladite pièce permettant l'inversion de l'enroulement du câble et faisant varier en se déplaçant la longueur de la portion bobinée sur la paroi intérieure et celle de la portion enroulée au voisinage de la paroi extérieure, caractérisé en ce que ladite pièce de guidage permet l'inversion simultanée de l'enroulement d'au moins deux câbles plats flexibles en un emplacement propre à chaque câble.

## Description

La présente invention concerne un dispositif assurant la liaison électrique entre deux corps respectivement fixe et mobile animés d'un mouvement relatif de rotation.

De tels dispositifs, également appelés contacts toumants, sont notamment employés dans l'industrie automobile, dans les colonnes de direction des véhicules pour permettre la connexion électrique entre des éléments situés dans le volant, et par conséquent mobiles en rotation, et un circuit fixe câblé dans l'habitacle desdits véhicules. Bien qu'il existe de nombreuses autres applications possibles de ces dispositifs, l'exemple des colonnes de direction sera utilisé à titre préférentiel dans la suite de la description, pour en faciliter la lecture en l'éclairant par cette application particulière.

Les contacts toumants connus et utilisés dans ce domaine sont configurés de telle manière que la partie fixe et la partie mobile définissent entre elles un espace annulaire d'axe confondu à l'axe de rotation, dans lequel est enroulé en spirale un câble plat flexible véhiculant plusieurs lignes conductrices. Cet espace annulaire comporte notamment deux parois d'allure parallèle à l'axe de rotation auxquelles sont fixées les deux extrémités du câble plat.

Dans ce type de configuration, le câble flexible investit différemment l'espace selon notamment le sens de la rotation. Ainsi, dans un premier sens, il se bobine autour de la pièce centrale du contact tournant. Dans l'autre sens de rotation, il s'enroule de manière lâche au voisinage de la paroi périphérique externe du dispositif. Dans tous les cas, il ne bénéficie d'aucun guidage particulier et son déplacement, notamment dans des directions radiales, n'est guère contrôlé. Pour assurer correctement sa fonction, il n'est en fait pratiquement jamais tendu dans l'espace annulaire qui le loge.

Il subit en revanche des contraintes constantes, notamment dues aux mouvements de rotation d'une partie par rapport à l'autre, dont la vitesse, la fréquence et l'amplitude dépendent du mouvement imprimé au volant. Ces contraintes, s'appliquant à des portions diverses du câble flexible, peuvent provoquer des vibrations ou des bruits qui ne sont pas maîtrisables, du fait de l'absence de tout élément de guidage du câble en mouvement.

Pour résoudre ce problème, qui conduit à un inconfort auditif pour les occupants du véhicule, il a été proposé d'inclure dans l'espace annulaire une pièce notamment destinée à le combler partiellement, pour empêcher dans la mesure du possible tout mouvement parasite du câble lors de ses phases d'enroulement / déroulement. Cette pièce occupe la quasi-totalité de l'espace annulaire, et comporte une fente d'allure radiale permettant le passage du câble de l'une à l'autre des parois auxquelles ses extrémités sont fixées. Elle assure de fait un guidage, puisque les espaces résiduels pour l'enroulement / déroulement du câble, situés de part et d'autres de ladite pièce, sont beaucoup plus réduits et ne permettent en particulier plus de déplacements d'allure radiale de certains tronçons du câble, typiquement générateurs de bruits et de vibrations.

Pour assurer sa fonction de guidage, la pièce annulaire comporte des faces se développant de préférence parallèlement aux parois de l'espace annulaire. Dans les configurations proposées, elle permet également l'inversion de l'enroulement du câble, au niveau de ladite fente radiale. Elle est alors entraînée selon une trajectoire circulaire centrée sur l'axe de rotation de la pièce mobile. Cette inversion, et le déplacement de la pièce annulaire relativement aux deux pièces fixe et mobile, permet en fait de faire varier les longueurs respectives de la portion de câble bobinée sur la paroi intérieure et de la portion enroulée au voisinage de la paroi extérieure.

L'interposition d'une telle pièce permet de plus de réduire sensiblement la longueur de câble nécessaire, du fait de son influence sur la différence des diamètres d'enroulement / déroulement du câble plat dans ses différentes phases de fonctionnement. Les contacts mécaniques avec les parois de l'espace annulaire sont alors corollairement réduits, ainsi que les frottements dus au câble flexible.

En d'autres termes, l'interposition d'une telle pièce intermédiaire permet la réduction du niveau de bruit, indispensable pour un accessoire situé à proximité du conducteur du véhicule, et une réduction substantielle de la longueur du câble plat flexible, facilitant son montage entre les parties fixe et mobile, et abaissant ses coûts de production ainsi que ceux du contact tournant.

Dans ces configurations connues, la pièce intermédiaire est entraînée selon ladite trajectoire circulaire par le câble flexible, quel que soit le sens de la rotation de la partie mobile par rapport à la partie fixe. Cet entraînement se fait par glissement de ladite pièce dans l'espace annulaire.

Dans l'évolution de la conception des véhicules d'aujourd'hui, on assiste actuellement à une multiplication des fonctions à l'usage du conducteur. Pour réduire l'encombrement du tableau de bord en boutons, commutateurs, écrans, etc., la tendance est alors de transférer un certain nombre de ces fonctions dans le volant. La quasi totalité d'entre elles nécessite cependant un raccordement électrique, qui est bien entendu réalisé via le contact tournant.

L'augmentation du nombre des conducteurs pourrait être absorbée en augmentant la capacité du câble flexible plat. Celui-ci verrait ainsi sa largeur croître, de même que la dimension axiale des corps fixe et mobile du contact tournant, qui s'oriente parallèlement à ladite largeur.

Cette solution n'est toutefois guère possible à mettre en oeuvre, ou alors seulement pour une augmentation limitée de la largeur du câble, notamment pour plusieurs raisons :
- l'espace disponible pour l'installation du contact tournant au niveau du haut de colonne de direction est limité ;
- un câble plat calibré pour doubler ou tripler le nombre de conducteurs imposerait en pratique une multiplication du même ordre de la longueur axiale du contact toumant ;
- un tel câble ne réagit plus aussi favorablement en termes de propriétés mécaniques, à des séquences d'enroulement / déroulement, qu'un câble deux à trois fois moins large.

Le document EP 0 924 815 fait état d'une solution dans laquelle, pour ne pas faire croître inconsidérément la longueur axiale du contact tournant, le câble flexible est enroulé suivant une configuration conique permettant d'absorber son augmentation de largeur dans les deux dimensions axiale et radiale.

Cette solution ne permet cependant pas de résoudre le problème précité selon lequel le nombre de conducteurs est doublé, voire triplé, sans conduire à une augmentation considérable du volume du contact toumant qui a des répercussions non négligeables sur la gestion de l'espace sous volant.

La présente invention propose une solution à ce problème qui autorise en pratique la multiplication des contacts sans modifications sensibles du volume du contact tournant.

A cet effet, le dispositif de l'invention assurant la liaison électrique entre deux corps respectivement fixe et mobile animés d'un mouvement relatif de rotation, définissant entre eux un espace annulaire d'axe confondu avec l'axe de rotation, et présentant deux parois en regard respectivement intérieure et extérieure issue chacune d'un desdits corps, entre lesquelles sont disposés d'une part au moins deux câbles plats flexibles de liaison électrique enroulé en spirale de sorte que chacune de leurs extrémités soient fixées à l'une desdites parois, et d'autre part au moins une pièce de guidage apte à se déplacer relativement aux dits corps lorsque ceux-ci sont en mouvement relatif, selon une trajectoire circulaire centrée sur ledit axe de rotation, ladite pièce permettant l'inversion de l'enroulement des câbles et faisant varier en se déplaçant la longueur de chaque portion bobinée sur la paroi intérieure et celle de chaque portion enroulée au voisinage de la paroi extérieure, la pièce de guidage permettant l'inversion simultanée de l'enroulement desdits câbles plats flexibles en un emplacement propre à chaque câble, et comportant une base plane annulaire guidée en rotation entre lesdites parois intérieure et extérieure, surmontée d'un volume d'allure annulaire présentant des surfaces cylindriques en regard desdites parois, ledit volume présentant des solutions de continuité en forme de fentes d'allure radiale permettant le passage des câbles et prévues en un nombre correspondant à celui desdits câbles.

L'invention se caractérise à titre principal en ce que les deux faces en vis à vis desdites fentes permettent respectivement le guidage pour l'inversion d'un câble et la réception de la boucle produite au niveau de ladite inversion, et sont en contact avec ledit câble respectivement lors du bobinage autour de la paroi intérieure et lors de l'enroulement au voisinage de la paroi extérieure.

La solution au problème de la multiplication du nombre de contacts se situe, selon l'invention, dans l'augmentation du nombre de câbles, qui conservent par ailleurs leurs propriétés et dimensionnements initiaux. Selon le cas, des adaptations seront bien entendu à prévoir au niveau des connecteurs, voire au niveau des corps fixe et mobile pour la fixation desdits connecteurs.

La multiplication des câbles flexibles plats n'entraîne pratiquement aucune modification du comportement du contact tournant en général, et de la pièce de guidage en particulier. Les enroulements des différents câbles, de part et d'autre de ladite pièce de guidage, se superposent le cas échéant entre cette pièce et les parois respectivement intérieure et extérieure.

Selon une configuration possible, la pièce de guidage comporte une base plane annulaire guidée en rotation entre lesdites parois inférieure et extérieure, surmontée d'un volume d'allure annulaire présentant des surfaces cylindriques en regard desdites parois, ledit volume présentant des solutions de continuité en forme de fentes d'allure radiale permettant le passage des câbles et prévues en un nombre correspondant à celui desdits câbles.

Cette pièce représente en fait une extension à plusieurs câbles du concept connu pour un câble. Bien entendu, le nombre de câbles opérant simultanément dans le contact toumant peut s'imposer des contraintes techniques de fonctionnement, par exemple au niveau de l'espace résiduel entre les parois intérieure et extérieure et les surfaces cylindriques de la pièce de guidage. Cet espace résiduel n'est en effet pas le même selon le nombre de câbles flexibles opérationnels.

Plus précisément encore, les deux faces en vis-à-vis desdites fentes permettent respectivement le guidage pour l'inversion d'un câble et la réception de la boucle produite au niveau de ladite inversion, et sont en contact avec ledit câble respectivement lors du bobinage autour de la paroi intérieure et lors de l'enroulement au voisinage de la paroi extérieure.

Comme cela a été signalé auparavant, la pièce de guidage est entraînée en rotation par les câbles, qui doivent donc pouvoir s'appuyer sur des surfaces permettant cet entraînement. Ces surfaces doivent au surplus permettre un guidage, puisque l'entraînement est en réalité effectué par une bande qui défile le long desdites surfaces.

Selon une possibilité, ces fentes comportent une face convexe d'allure cylindrique en arc semi-circulaire, l'autre face présentant un évidement arrondi d'allure également cylindrique, l'axe desdits cylindres étant d'allure parallèle à celui de la rotation relative des corps fixe et mobile.

Lors du bobinage autour de la paroi intérieure, le câble flexible épouse ladite face convexe, alors que lors du mouvement inverse de la pièce de guidage, le câble repousse cette dernière en se logeant dans l'évidement cylindrique précité.

Les formes des faces en regard l'une de l'autre permettent à des câbles plats, malgré leur souplesse de prendre un appui optimal sur la pièce de guidage et entraîner cette demière en rotation, dans le sens horaire et dans le sens antihoraire.

Pour améliorer encore le guidage périphérique des câbles lors de leur enroulement / déroulement, la pièce de guidage peut comporter des galets d'axe d'allure parallèle à l'axe de rotation des corps fixe et mobile, dépassant des surfaces cylindriques périphériques et faisant face aux parois intérieure et extérieure.

Selon les emplacements de fixation des extrémités desdits câbles flexibles, il sera possible de prévoir des câbles plats d'une longueur unique.

Dans nombre d'applications cependant, il n'existe, pour des raisons pratiques, qu'un emplacement de connexion à la fois sur le corps mobile et sur le corps fixe. Dans ce cas, s'il y a une pluralité de câbles, la longueur de chacun sera adaptée pour permettre la fixation à l'unique emplacement respectivement sur les corps fixe et mobile, tout en assurant la coopération avec un tambour d'inversion propre.

Le dispositif de l'invention permet de plus la détection de la position neutre du volant, c'est-à-dire celle pour laquelle les roues directrices sont alignées sur l'axe longitudinal du véhicule.

Ainsi, la pièce de guidage peut comporter un marquage se positionnant en face de moyens de détection solidarisés au corps fixe lorsque le câble flexible est dans une configuration d'enroulement permettant un déplacement résiduel de même longueur dans les deux sens de rotation.

Ce degré d'enroulement du câble flexible marque bien ladite position neutre en ce qu'il permet une rotation de même amplitude dans les deux sens.

De préférence, les extrémités des câbles plats sont munies de connecteurs facilitant leur fixation aux parois intérieure et extérieure.

Le dispositif de la présente invention permet ainsi d'augmenter de manière sensible le nombre de conducteurs équipant le contact toumant sans se préoccuper de l'encombrement volumique du dispositif. La solution de l'invention ne nécessite au surplus qu'un certain nombre de modifications mineures à apporter aux solutions monocâble, et s'avère à ce titre facile et peu onéreuse à fabriquer.

L'invention va à présent être décrite plus en détail, en référence aux figures annexées, pour lesquelles :
- la figure 1 est une vue en perspective éclatée d'un dispositif dit à contacts tournants selon l'invention ;
- la figure 2 est une vue de dessus ouverte dudit dispositif, montrant les différents éléments assemblés, en position de fonctionnement ; et
- la figure 3 représente, toujours en perspective, un dispositif assemblé sans son couvercle.

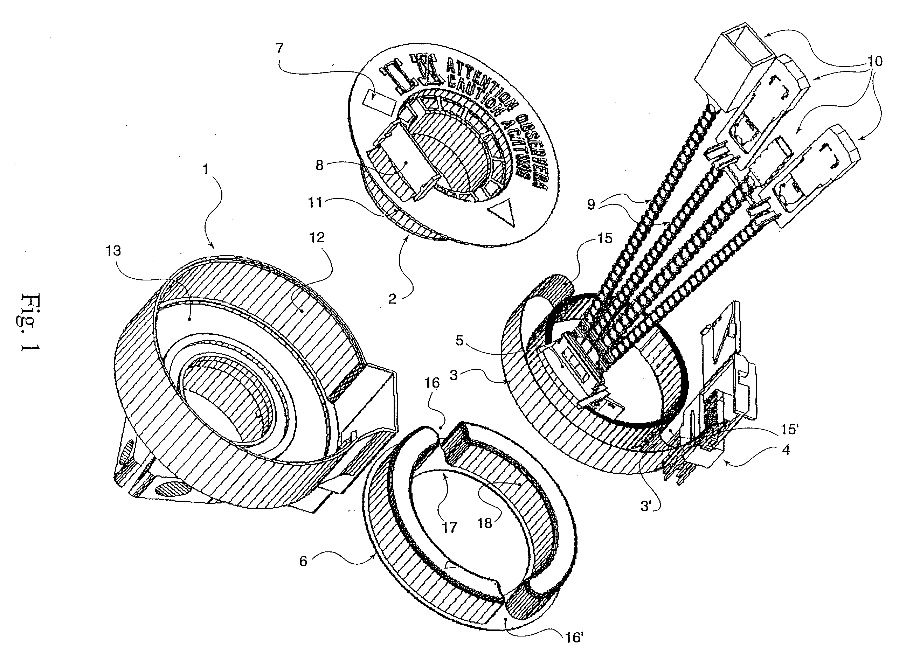

En référence à la figure 1, le dispositif selon l'invention se compose principalement d'un corps fixe (1) à l'intérieur duquel est monté libre en rotation un corps mobile (2), en l'occurrence mécaniquement relié à la colonne de direction d'un véhicule, et par conséquent assujetti aux mouvements rotatifs imprimés au volant. Un double câble plat flexible (3, 3') de liaison électrique, doté à ses deux extrémités de connecteurs (4, 5) de liaison respectivement avec le corps fixe (1) et le corps mobile (2), est disposé entre ces derniers. Dans cette hypothèse, les deux câbles (3, 3') sont fixés aux mêmes connecteurs (4, 5), et par conséquent aux mêmes emplacements sur les corps fixe (1) et mobile (2).

Une pièce de guidage (6) évoluant selon une trajectoire circulaire relativement aux dits corps (1, 2) permet d'assurer d'une part l'inversion du sens d'enroulement des câbles plats (3, 3'), et d'autre part leur guidage et leur maintien à l'intérieur du contact tournant. Un couvercle (7) prévu pour se fixer sur l'ouverture supérieure du corps fixe (1) complète la définition du volume intérieur dans lequel se produisent l'enroulement et le déroulement des câbles plats flexibles (3, 3'). Ce couvercle (7) comporte un orifice protégé par un muret (8) permettant le passage de câbles surmoulés (9) dont les extrémités sont munies de connecteurs (10) destinés à les raccorder à des circuits électriques câblés dans le véhicule.

Le corps fixe (1), le corps mobile (2) et le couvercle (7) définissent un volume sensiblement annulaire à section rectangulaire dans lequel sont disposés et se déplacent d'une part les câbles plats (3, 3'), et d'autre part la pièce de guidage (6). Ce volume comprend une paroi intérieure (11), appartenant au corps mobile (2), à laquelle est fixé le connecteur (5) équipant l'une des extrémités des câbles plats (3, 3'). Le corps fixe (1) comprend la paroi extérieure (12) dudit volume, ainsi que son fond (13). Un évidement (14) pratiqué dans ladite paroi (12) permet la fixation du connecteur (4) équipant l'autre extrémité des câbles plats (3, 3').

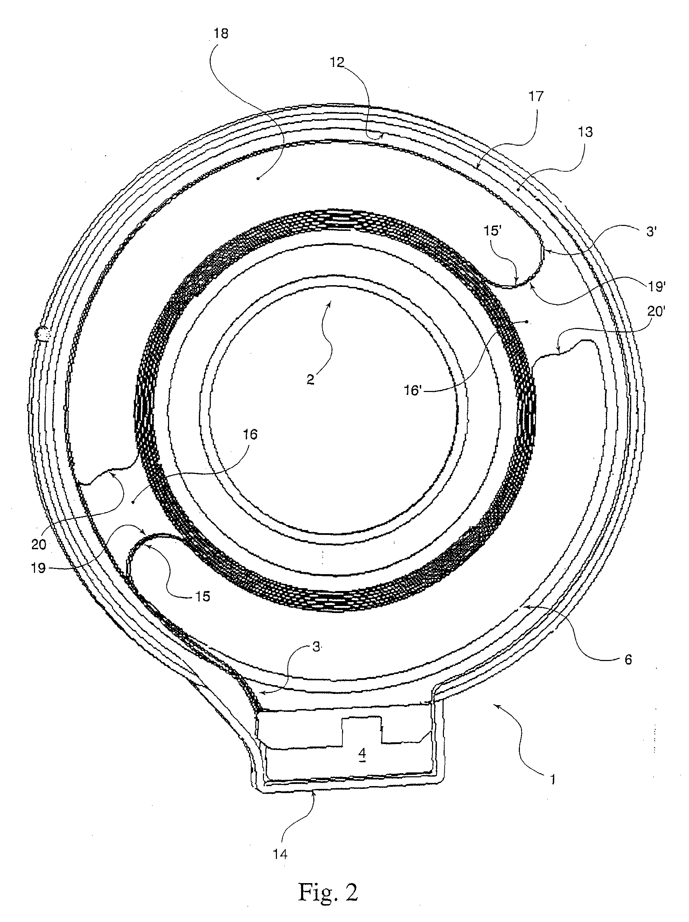

La pièce de guidage (6) est composée d'une base annulaire (17) surmontée d'un volume annulaire (18) à surfaces périphériques cylindriques. Ce volume (18) est interrompu par deux fentes (16, 16') permettant le passage et l'inversion des câbles plats (3, 3'). Les deux faces (19, 19' ; 20, 20') en regard de ces fentes (16, 16'), qui sont notamment représentées très clairement en figure 2, sont constituées de portions de cylindre. L'une de ces faces (19, 19') présente une section convexe arrondie, alors que l'autre (20, 20') comporte un évidement, également d'allure arrondie. Ces faces permettent le guidage des câbles (3, 3') dans les deux sens de rotation relative des corps (1, 2).

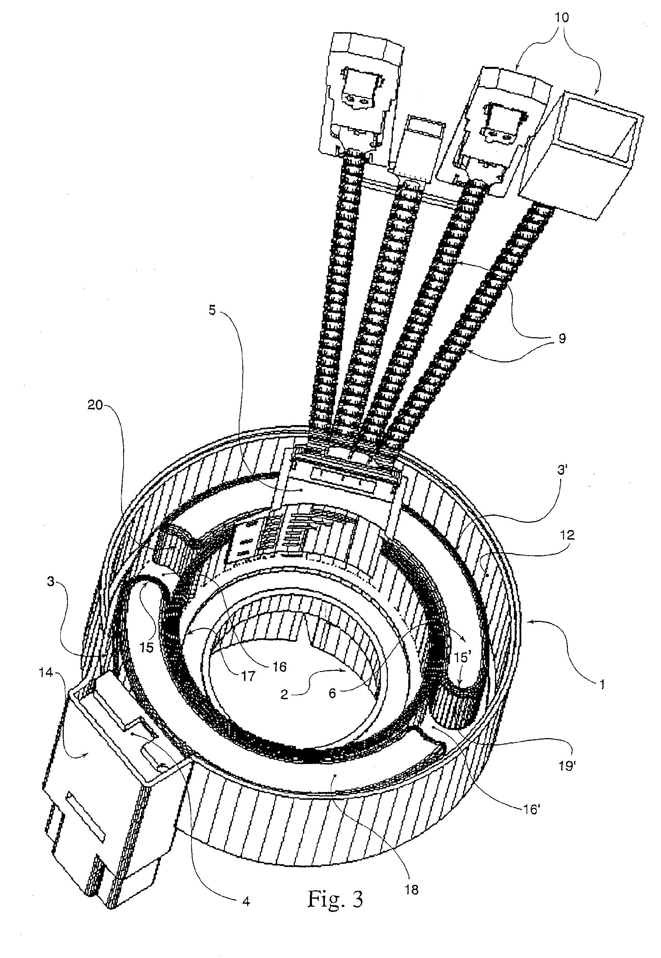

Les profils (19, 19') sont respectivement au contact des câbles (3, 3') lorsque le corps (2) toume dans le sens trigonométrique, ainsi que cela apparaît dans les figures 2 et 3. A l'inverse, lorsqu'il tourne dans le sens des aiguilles d'une montre, lesdits câbles (3, 3') quittent le contact des profils (19, 19') et l'extrémité des boucles (15, 15') vient se loger dans les évidements (20, 20'). La pièce de guidage (6) est alors repoussée par lesdites boucles (5, 5') dans ce même sens.

Dans cette configuration, la pièce de guidage (6) est exclusivement entraînée en rotation par les câbles (3, 3'). C'est la raison pour laquelle la forme des profilés (19, 19') d'une part et (20, 20') d'autre part a été étudiée pour permettre d'offrir une surface de contact maximale et de forme si possible complémentaire à celle des boucles (15, 15') formées par les câbles (3, 3') dans leur zone d'inversion du sens d'enroulement.

Les câbles (3, 3') présentent ainsi une boucle se formant sur la partie concave de la pièce de guidage (6) des profilés (20, 20'), laquelle prend appui sur la paroi extérieure (12), pour pousser ladite pièce de guidage (6). La flexibilité et l'épaisseur des câbles (3, 3') sont choisies avantageusement en combinaison avec la forme des profilés (19, 19') et (20, 20') et le jeu existant entre la paroi extérieure (12) et la pièce de guidage (6), de manière à obtenir un fonctionnement optimal du dispositif conforme à l'invention.

La pièce de guidage (6) se déplace en pratique moins de deux fois moins vite que le corps mobile (2). Elle comporte, sur une zone non masquée par les câbles (3, 3'), par exemple au niveau de la base annulaire plane (17), un repère ou marquage, par exemple sous la forme d'un trait ou d'une encoche, qui est prévu pour se positionner en face de moyens de détection solidarisés au corps fixe (1) (non représentés).

Ces moyens de détection peuvent être disposés à l'extérieur du corps (1), dans lequel peut alors être pratiquée une fenêtre d'accès. Ils peuvent par exemple consister en un système optique de lecture dudit repère, lequel transmet en permanence une information à une unité centrale apte à gérer un signal de centrage.

Dans la représentation des figures 2 et 3, la quasi-totalité des câbles flexibles (3, 3') est bobinée contre la paroi intérieure (11) du corps mobile (2). Il s'agit de l'une des deux positions extrêmes, c'est-à-dire que le volant est en principe tourné au maximum dans l'un de ses deux sens de rotation.

L'invention ne se résume bien entendu pas à l'exemple qui a été décrit ci-dessus. Ainsi, comme on l'a mentionné auparavant, on pourrait prévoir des variantes avec des galets de guidage dans le volume annulaire (18). Plus généralement, l'invention englobe toutes les variantes de forme et de configuration qui sont à la portée de l'homme de l'art.

## Revendications

1. Dispositif assurant la liaison électrique entre deux corps respectivement fixe et mobile animés d'un mouvement relatif de rotation, définissant entre eux un espace annulaire d'axe confondu avec l'axe de rotation, et présentant deux parois en regard respectivement intérieure et extérieure issue chacune d'un desdits corps, entre lesquelles sont disposés d'une part au moins deux câbles plats flexibles de liaison électrique enroulé en spirale de sorte que chacune de leurs extrémités soient fixées à l'une desdites parois, et d'autre part au moins une pièce de guidage apte à se déplacer relativement aux dits corps lorsque ceux-ci sont en mouvement relatif, selon une trajectoire circulaire centrée sur ledit axe de rotation, ladite pièce permettant l'inversion de l'enroulement des câbles et faisant varier en se déplaçant la longueur de chaque portion bobinée sur la paroi intérieure et celle de chaque portion enroulée au voisinage de la paroi extérieure, la pièce de guidage permettant l'inversion simultanée de l'enroulement desdits câbles plats flexibles en un emplacement propre à chaque câble, et comportant une base plane annulaire guidée en rotation entre lesdites parois intérieure et extérieure, surmontée d'un volume d'allure annulaire présentant des surfaces cylindriques en regard desdites parois, ledit volume présentant des solutions de continuité en forme de fentes d'allure radiale permettant le passage des câbles et prévues en un nombre correspondant à celui desdits câbles, **caractérisé en ce que** les deux faces en vis à vis desdites fentes permettent respectivement le guidage pour l'inversion d'un câble et la réception de la boucle produite au niveau de ladite inversion, et sont en contact avec ledit câble respectivement lors du bobinage autour de la paroi intérieure et lors de l'enroulement au voisinage de la paroi extérieure.

2. Dispositif assurant la liaison électrique entre deux corps respectivement fixe et mobile animés d'un mouvement relatif de rotation selon la revendication 1, **caractérisé en ce que** lesdites fentes d'inversion comportent une face convexe d'allure cylindrique en arc semi-circulaire, l'autre face présentant un évidement arrondi d'allure également cylindrique, l'axe desdits cylindres étant d'allure parallèle à celui de la rotation relative des corps fixe et mobile.

3. Dispositif assurant la liaison électrique entre deux corps respectivement fixe et mobile animés d'un mouvement relatif de rotation, selon la revendication 2, **caractérisé en ce que** la pièce de guidage permet lors du bobinage autour de la paroi intérieure au câble flexible d'épouser la face convexe, alors que lors du mouvement inverse de la pièce de guidage, le câble flexible repousse cette dernière en se logeant dans l'évidement précité.

4. Dispositif assurant la liaison électrique entre deux corps respectivement fixe et mobile animés d'un mouvement relatif de rotation selon l'une des revendications précédentes, **caractérisé en ce que** les câbles plats flexibles sont fixés au même endroit sur les parois intérieure et extérieure, leurs longueurs respectives étant prévues pour assurer la coopération avec une fente d'inversion propre à chacun.

5. Dispositif assurant la liaison électrique entre deux corps respectivement fixe et mobile animés d'un mouvement relatif de rotation selon l'une des revendications précédentes, **caractérisé en ce que** le volume annulaire comporte des galets d'axe d'allure parallèle à l'axe de rotation des corps fixe et mobile, dépassant des surfaces cylindriques périphériques et faisant face aux parois intérieure et extérieure.

6. Dispositif assurant la liaison électrique entre deux corps respectivement fixe et mobile animés d'un mouvement relatif de rotation selon l'une quelconque des revendications précédentes, **caractérisé en ce que** la pièce de guidage comporte un marquage se positionnant en face de moyens de détection solidarisés au corps fixe lorsque le câble flexible est dans une configuration permettant un déplacement résiduel de même longueur dans les deux sens de rotation.

7. Dispositif assurant la liaison électrique entre deux corps respectivement fixe et mobile animés d'un mouvement relatif de rotation selon l'une quelconque des revendications précédentes, **caractérisé en ce que** les extrémités des câbles plats sont munies de connecteurs facilitant leur fixation aux parois intérieure et extérieure.
